# EUROPEAN PATENT SPECIFICATION

(11) **EP 3 831 600 B1**
(45) Date of publication and mention of the grant of the patent: **23.10.2024**
(21) Application number: 19841227.2
(22) Date of filing: 25.07.2019
(51) Int. Cl.: B29C 48/21, B32B 27/36, B32B 27/18, B32B 27/30, B60J 1/00, B29K 33/00, B29K 69/00, G02B 5/20, G02B 5/22

(54) **INFRARED LIGHT SHIELDING MULTILAYER SHEET AND METHOD FOR PRODUCING SAME**
INFRAROTLICHT ABSCHIRMENDE MEHRSCHICHTIGE FOLIE UND VERFAHREN ZU IHRER HERSTELLUNG
FEUILLE MULTICOUCHE À PROTECTION CONTRE LA LUMIÈRE INFRAROUGE ET PROCÉDÉ DE PRODUCTION ASSOCIÉ

(30) Priority: 27.07.2018 JP 2018141338
(43) Date of publication of application: 09.06.2021
(73) Proprietor: Kuraray Co., Ltd., Kurashiki-shi, Okayama 710-0801 (JP)
(72) Inventor: OZAWA, Yushi, Tainai-shi, Niigata 959-2691 (JP); OHTA, Daisuke, Tainai-shi, Niigata 959-2691 (JP)
(74) Representative: Müller-Boré & Partner Patentanwälte PartG mbB
(86) International application number: PCT/JP2019/029207
(87) International publication number: WO 2020/022426

(56) References cited:
- WO-A1-2009/054051
- WO-A1-2009/054060
- WO-A1-2015/133530
- WO-A1-2016/104375
- WO-A1-2017/030147
- WO-A1-2017/216680
- WO-A1-2017/217429
- WO-A1-2017/217429
- WO-A1-2018/003863
- WO-A1-2018/003863
- WO-A1-2018/020819
- WO-A1-2018/084068
- JP-A- 2015 128 899
- JP-A- 2019 044 109
- JP-A- H05 177 786
- JP-A- H06 312 489
- TW-A- 200 950 965

## Description

### Technical Field

The present invention relates to an infrared shielding laminated sheet and a method for producing the same.

### Background Art

For the glazing used in transport machinery such as automobiles, replacement of materials from glass with a thermoplastic resin has been progressed for the purpose of reducing the weight of members and improving the safety. As alternative materials, polycarbonate resins excellent in impact resistance are contemplated. Although the polycarbonate resin tends to be typically inferior in scratch resistance and weather resistance, these characteristics can be improved by forming a hard coat layer on the surface of the polycarbonate resin.

For example, Patent Literature 1 discloses a laminate in which a hard coat layer excellent in weather resistance consisting of a first layer obtained by heat curing an acryl resin composition containing (A) an acryl copolymer having a cycloalkyl group-containing unit and (B) a polyisocyanate compound, and a second layer obtained by heat curing an organosiloxane resin composition is formed on a polycarbonate resin sheet (Claims 1 and 12).

When infrared shielding materials are used for window members such as automobiles and buildings and the like, they can suppress a temperature increase in a vehicle, a room, and the like, and can reduce the sensible temperature of humans. In particular, a transparent resin having infrared shielding properties has high environmental load reduction effects such as a reduction in CO₂ emission, from the viewpoints of reduction in the weight of materials and thermal management, and is thus preferable.

Patent Literatures 2 to 4 relate to the infrared shielding material.

Patent Literature 2 discloses a laminated glass containing a heat reflecting film having a sandwich structure in which an Ag film is sandwiched between a pair of transparent metal oxide films consisting of ZnO films, TiO₂ films, ITO films, SnO₂ films, or the like (Claim 2).

Patent Literature 3 discloses a multilayered polymer film having a plurality of alternating layers of a crystalline naphthalene dicarboxylic acid polyester and another selected polymer, which reflects infrared energy and transmits visible light (Claims 1 and 29).

Patent Literature 4 discloses a composition in which an inorganic infrared shielding additive and a carbon black are added to a polycarbonate resin (Claim 1).

### Citation List

### Patent Literature

Patent Literature 1: International Patent Publication No. WO 2007/105741
Patent Literature 2: Japanese Unexamined Patent Application Publication No. H7-187727
Patent Literature 3: International Patent Publication No. WO 1995/17303 (Published Japanese Translation of PCT International Publication for Patent Application, No. H9-506837)
Patent Literature 4: International Patent Publication No. WO 2007/008476 (Published Japanese Translation of PCT International Publication for Patent Application, No. 2009-501266) Patent Literature 5: International Patent Publication No. WO 2017/217429 A1 discloses a jet-black film having an improved appearance.

### Summary of Invention

### Technical Problem

In Patent Literature 2, although the heat reflecting film is vapor deposited by a sputtering method (the [Examples] section), this method requires high production costs, and is thus not preferable.

The multilayer film described in Patent Literature 3 requires high production costs, and is thus not preferable. Also, the performance thereof may be decreased by the thermal processing upon bonding with a polycarbonate resin sheet.

Although the composition described in Patent Literature 4 can be produced at low costs, its color tone is reddish black that is specific to carbon black, and is thus not preferable. In applications such as resin glazing, black close to jet black is preferable. Also, an increase in the temperature of the resin by infrared absorption may promote the deterioration of the polycarbonate resin that originally has low weather resistance, which may promote change in color (coloring) during a weather resistance test.

The present invention has been made in view of the above situation, and an object of the present invention is to provide a laminated sheet having a good color tone, good infrared shielding properties, and excellent weather resistance, and a production method thereof.

### Solution to Problem

The present invention provides the laminated sheet, and the production method thereof according to claims 1 and 9, respectively. Further embodiments are described in the dependent claims.

### Advantageous Effects of Invention

According to the present invention, a laminated sheet having a good color tone, good infrared shielding properties, and excellent weather resistance, and a production method thereof can be provided.

### Brief Description of the Drawings

[Fig. 1] Fig. 1 is a schematic cross-sectional view of the laminated sheet of the first embodiment according to the present invention.
[Fig. 2] Fig. 2 is a schematic cross-sectional view of the laminated sheet of the second embodiment according to the present invention.
[Fig. 3] Fig. 3 is a schematic view of the apparatus for production of the laminated sheet of one embodiment according to the present invention.
[Fig. 4] Fig. 4 is an explanatory view (schematic cross-sectional view) of the falling ball test.

### Description of Embodiments

### [Laminated Sheet]

The laminated sheet of the present invention has a structure in which a surface layer containing a methacrylic resin (PM) is laminated on at least one surface of a substrate layer containing a polycarbonate resin (PC).

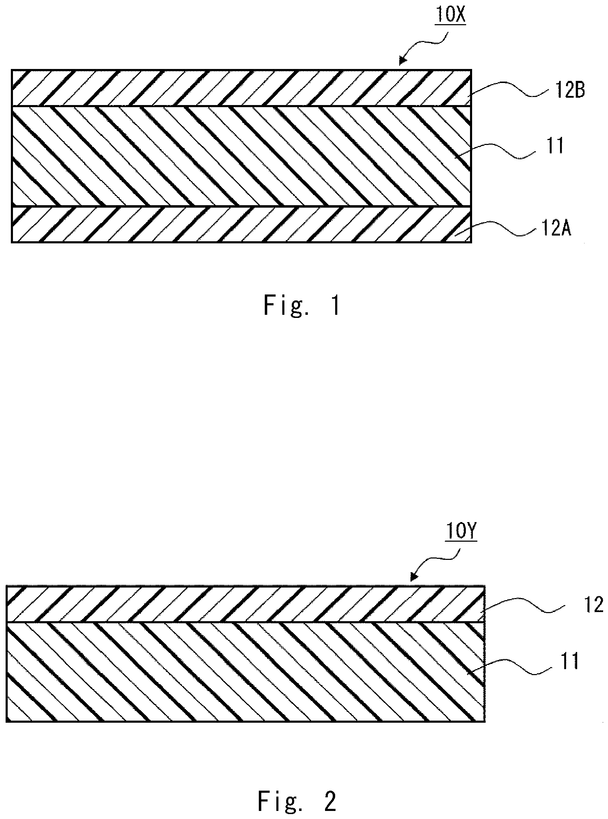

Fig. 1 and Fig. 2 are schematic cross-sectional views of the laminated sheets of the first embodiment and the second embodiment according to the present invention. In the drawings, the same components are given the same reference characters.

A laminated sheet 10X of the first embodiment shown in Fig. 1 has a structure in which surface layers 12A and 12B containing the methacrylic resin (PM) are respectively laminated on both surfaces of a substrate layer 11 containing the polycarbonate resin (PC). The composition and thickness of the surface layer 12A and the surface layer 12B may be the same or different.

A laminated sheet 10Y of the second embodiment shown in Fig. 2 has a structure in which the surface layer 12 containing the methacrylic resin (PM) is laminated on one surface of the substrate layer 11 containing the polycarbonate resin (PC).

In the laminated sheets 10X and 10Y, the thickness of each layer can be appropriately designed. The laminated sheets 10X and 10Y may have any optional layer other than the above.

The laminated sheet of the present invention is an infrared shielding laminated sheet suitable for resin glazing and the like.

Since the balance between light shielding properties and light transmitting properties is good when used as resin glazing and the like, the laminated sheet of the present invention has a total light transmittance (Tt) of 3 to 60%.

Since having infrared shielding properties suitable for resin glazing and the like, the laminated sheet of the present invention has a transmittance at a wavelength of 1,500 nm of 60% or less.

Since being capable of exhibiting a color tone close to jet black suitable for resin glazing and the like, the laminated sheet of the present invention has an absolute value of a* value of 10.0 or less and an absolute value of b* of 10.0 or less in the L*a*b* color space defined by JIS Z 8781-4.

In the laminated sheet of the present invention, the substrate layer containing the polycarbonate resin (PC) contains one or two or more colorants. The surface layer containing the methacrylic resin (PM) can preferably contain one or two or more infrared absorbing agents.

The total light transmittance (Tt), the transmittance at a wavelength of 1,500 nm, and the color tone (the absolute value of a* value and the absolute value of b* value) can be adjusted depending on the type and the added concentration of one or two or more colorants added to the substrate layer, the thickness of the substrate layer, and if necessary, the type and the added concentration of one or two or more infrared absorbing agents added to the surface layer and the thickness of the surface layer.

### (Substrate Layer)

### <Polycarbonate Resin (PC)>

The substrate layer contains one or more polycarbonate resins (PC). As used herein, the polycarbonate resin is a usual unmodified polycarbonate resin such as a bisphenol A type polycarbonate resin, unless otherwise stated.

The polycarbonate resin (PC) can be suitably obtained by copolymerization of one or more dihydric phenols and one or more carbonate precursors. Examples of the dihydric phenols include 2,2-bis(4-hydroxyphenyl)propane (commonly called bisphenol A), 1,1-bis(4-hydroxyphenyl)ethane, 1,1-bis(4-hydroxyphenyl)cyclohexane, 2,2-bis(3-methyl-4-hydroxyphenyl)propane, 2,2-bis(3,5-dimethyl-4-hydroxyphenyl)propane, bis(4-hydroxyphenyl)sulfide, and bis(4-hydroxyphenyl)sulfone, and among them, bisphenol A is preferable. Examples of the carbonate precursors include carbonyl halides such as phosgene; carbonate esters such as diphenyl carbonate; and haloformates such as dihaloformate of a dihydric phenol.

Examples of the method for producing the polycarbonate resin (PC) include an interfacial polymerization method in which an aqueous solution of the dihydric phenol and an organic solvent solution of the carbonate precursor are reacted at the interface, and a transesterification method in which the dihydric phenol and the carbonate precursor are reacted under high temperature, reduced pressure, and solvent-free conditions.

The weight average molecular weight (Mw) of the polycarbonate resin (PC) is preferably 10,000 to 100,000, and more preferably 20,000 to 70,000. When the Mw is 10,000 or more, the laminated sheet of the present invention is excellent in impact resistance and heat resistance. When the Mw is 100,000 or less, the polycarbonate resin (PC) is excellent in moldability and the productivity of the laminated sheet of the present invention can be increased.

The melt flow rate (MFR) of the constituent resin of the substrate layer containing one or more polycarbonate resins (PC) is preferably 1 to 30 g/10 minutes, more preferably 3 to 20 g/10 minutes, and particularly preferably 5 to 10 g/10 minutes, from the viewpoint of the stability of hot melt molding. As used herein, the MFR of the constituent resin of the substrate layer is a value measured using a melt indexer under the conditions of a temperature of 300°C and 1.2 kg load, unless otherwise stated.

Commercial products may be used as the polycarbonate resin (PC). Examples thereof include "Calibre (register trade mark)" and "SD POLYCA (register trade mark)" manufactured by Sumika Styron Polycarbonate Limited, "Iupilon/NOVAREX (register trade mark)" manufactured by Mitsubishi Engineering-Plastics Corporation, "TARFLON (register trade mark)" manufactured by Idemitsu Kosan Co., Ltd., and "Panlite (register trade mark)" manufactured by Teijin Chemicals Ltd.

### <Colorant>

The substrate layer contains one or two or more colorants. Examples of the colorant include pigments and organic dyes. Typically, there is a tendency that pigments are excellent in weather resistance but poor in dispersion is more likely to be caused than organic dyes, and there is also a tendency that organic dyes are poorer in weather resistance than pigments but hardly cause poor dispersion and are excellent in productivity.

As the colorant, a carbon black that is an inorganic pigment and/or an organic dye are/is preferable. The color of the substrate layer colored by the colorant is not particularly limited, and it may be black or any other colors. In applications of resin glazing and the like, black is preferable, and in particular, black close to jet black is preferable. When the color of the substrate layer is to be colored black, one or two or more colorants that exhibit black by themselves may be used, or a plurality of types of colorants that exhibit black by combination thereof may be used.

Organic dyes tend to be poor in weather resistance as compared with inorganic pigments such as carbon black. In the laminated sheet of the present invention, the deterioration of the organic dye and the deterioration of the color tone associated therewith can be suppressed in a weather resistance test, because the organic dye that can be contained in the substrate layer can be protected from external light by the surface layer (for example, an ultraviolet absorber contained in the surface layer).

The substrate layer preferably contains no infrared absorbing agent. Typically, there is a tendency that, in the layer to which the infrared absorbing agent is added, the temperature is increased and the deterioration reaction of the resin and the like is promoted by absorbing infrared rays during the weather resistance test. When the infrared absorbing agent is added to the substrate layer containing the polycarbonate resin (PC) having poor weather resistance, the change in color during the weather resistance test (coloring) may be promoted.

As the carbon black, known ones can be used and the kind of its raw material and the production method thereof are not particularly limited. Examples thereof include oil furnace black, channel black, acetylene black, and ketjen black.

The average particle diameter of the carbon black is not particularly limited and is preferably 5 to 60 nm, more preferably 7 to 55 nm, and particularly preferably 10 to 50 nm from the viewpoints of suppressing the haze of the laminated sheet and suppressing the generation of aggregation defects of the carbon black.

As the organic dye, known ones can be used and examples thereof include anthraquinones, azos, anthrapyridones, perylenes, anthracenes, perinones, indanthrones, quinacridones, xanthenes, thioxanthenes, oxazines, oxazolines, indigoids, thioindigoids, quinophtalones, naphthalimides, cyanines, methines, quinolines, pyrazolones, lactones, coumarins, bis-benzoxazolyl thiophenes, naphthalene tetracarboxylic acids, phthalocyanines, triarylmethanes, aminoketones, bis(styryl)biphenyls, azines, rhodamines, and derivatives thereof. Anthraquinones, perylenes, perinones, azos, methines, quinolines, and the like are preferable from the viewpoints of high heat resistance, properties having a broad light absorption band in the long wave length region, and weather resistance.

One or two or more organic dyes of any color can be used. As described above, in applications such as resin glazing, one or two or more organic dyes that exhibit black by themselves, or a plurality of types of organic dyes that exhibit black in combination is preferably used.

Hereinafter, suitable specific examples of the organic dye are illustrated in generic names of Color Index.

Examples of anthraquinones include Solvent Red 52, Solvent Red 111, Solvent Red 149, Solvent Red 150, Solvent Red 151, Solvent Red 168, Solvent Red 191, Solvent Red 207, Disperse Red 22, Disperse Red 60, Disperse Violet 31, Solvent Blue 35, Solvent Blue 36, Solvent Blue 63, Solvent Blue 78, Solvent Blue 83, Solvent Blue 87, Solvent Blue 94, Solvent Blue 97, Solvent Green 3, Solvent Green 20, Solvent Green 28, Disperse Violet 28, Solvent Violet 13, Solvent Violet 14, and Solvent Violet 36.

Examples of perinones include Solvent Orange 60, Solvent Orange 78, Solvent Orange 90, Solvent Violet 29, Solvent Red 135, Solvent Red 162, and Solvent Red 179.

Examples of perylenes include Solvent Green 3, Solvent Green 5, Solvent Orange 55, Vat Red 15, Vat Orange 7, F Orange 240, F Red 305, F Red 339, and F Yellow 83.

Examples of azos include Solvent Yellow 14, Solvent Yellow 16, Solvent Yellow 21, Solvent Yellow 61, Solvent Yellow 81, Solvent Red 23, Solvent Red 24, Solvent Red 27, Solvent Red 8, Solvent Red 83, Solvent Red 84, Solvent Red 121, Solvent Red 132, Solvent Violet 21, Solvent Black 21, Solvent Black 23, Solvent Black 27, Solvent Black 28, Solvent Black 31, Solvent Orange 37, Solvent Orange 40, and Solvent Orange 45.

Examples of methines include Solvent Orange 80 and Solvent Yellow 93.

Examples of quinolines include Solvent Yellow 33, Solvent Yellow 98, Solvent Yellow 157, Disperse Yellow 54, and Disperse Yellow 160.

Two or more organic dyes are preferably used in combination so that a laminated sheet having high color depth and clarity, and excellent in color tone are be obtained. It is preferable to combine two or more selected from the group consisting of anthraquinones, perylenes, perinones, azos, methines, and quinolines. From the same reason, one or two or more organic dyes and a carbon black are preferably used in combination as the colorant.

The concentration and the mass per unit area of the colorant (preferably a carbon black and/or an organic dye) contained in the substrate layer are designed so that the total light transmittance (Tt) of the laminated sheet can be 3 to 60% depending on the thickness of the substrate layer and the total thickness of the laminated sheet. The concentration of the colorant contained in the substrate layer is preferably 0.0005 to 0.03% by mass, more preferably 0.000625 to 0.0257% by mass, and particularly preferably 0.000714 to 0.0225% by mass, depending on the thickness of the substrate layer. The mass of the colorant contained per unit area of the substrate layer is preferably 60 to 1080 mg/m², more preferably 75 to 925 mg/m², and particularly preferably 85 to 810 mg/m².

The timing of the addition of the colorant is not particularly limited and it may be during polymerization or after polymerization of the polycarbonate resin (PC).

### <Optional Components>

The substrate layer can contain one or more other polymers, if necessary. Examples of the other polymers are not particularly limited and include other thermoplastic resins such as polyolefins such as polyethylene and polypropylene, polyamide, polyphenylene sulfide, polyetheretherketone, polyester, polysulfone, polyphenylene oxide, polyimide, polyetherimide, and polyacetal; and thermosetting resins such as phenol resins, melamine resins, silicone resins, and epoxy resins. The content of other polymers in the substrate layer is preferably 10% by mass or less, more preferably 5% by mass or less, and particularly preferably 2% by mass or less.

The substrate layer can contain other various additives other than the colorant, if necessary. Examples of the other additives include antioxidants, thermal degradation inhibitors, ultraviolet absorbers, light stabilizers, lubricants, mold releasing agents, polymer processing aids, antistatic agents, flame retardants, light diffusion agents, delustering agents, impact resistance modifiers such as core-shell particles and block copolymers, and fluorescent materials. The content of the additive can be appropriately set within a range not impairing the effect of the present invention. For example, the content of the antioxidant is preferably 0.01 to 1 part by mass, the content of the ultraviolet absorber is preferably 0.01 to 3 parts by mass, the content of the light stabilizer is preferably 0.01 to 3 parts by mass, and the content of the lubricant is preferably 0.01 to 3 parts by mass, per 100 parts by mass of the constituent resin of the substrate layer.

When other polymers and/or other additives are added to the substrate layer, the timing of the addition may be during polymerization or after polymerization of the polycarbonate resin (PC).

### (Surface layer)

The surface layer is a methacrylic resin-containing layer containing one or more methacrylic resins (PM). The methacrylic resin (PM) is a resin excellent in luster, transparency, surface hardness, and the like. The content of the methacrylic resin (PM) in the surface layer is preferably 20 to 100% by mass.

The melt flow rate (MFR) of the constituent resin of the methacrylic resin-containing layer containing one or more methacrylic resins (PM) is preferably 1 to 10 g/10 minutes, more preferably 1.5 to 7 g/10 minutes, and particularly preferably 2 to 4 g/10 minutes from the viewpoint of the stability of hot melt molding. As used herein, the MFR of the constituent resin of the methacrylic resin-containing layer is a value measured using a melt indexer at a temperature of 230°C and under 3.8 kg load, unless otherwise stated.

Examples of the methacrylic resin-containing layer that is preferable as the surface layer include a methacrylic resin-containing layer (MLA) consisting of a methacrylic resin (composition) that can contain one or more methacrylic resins (PM) and, if necessary, one or more other polymers; a methacrylic resin-containing layer (MLB) consisting of a methacrylic resin composition (MR1) that contains the methacrylic resin (PM) and an SMA resin (S) (the details will be described later), and can further contain, if necessary, one or more other polymers; and a methacrylic resin-containing layer (MLC) consisting of a methacrylic resin composition (MR2) that contains the methacrylic resin (PM) and rubber particles having a multilayer structure (RP) (the details will be described later), and can further contain, if necessary, one or more other polymers.

<Methacrylic Resin (PM)>

The methacrylic resin (PM) contained in the methacrylic resin-containing layers (MLA) to (MLC) is preferably a homopolymer or a copolymer containing a structural unit derived from one or more methacrylic acid hydrocarbon esters (hereinafter also simply referred to as the methacrylic acid ester) containing methyl methacrylate (MMA). The hydrocarbon group in the methacrylic acid ester may be an acyclic aliphatic hydrocarbon group such as methyl group, ethyl group, and propyl group; a cycloaliphatic hydrocarbon group; or an aromatic hydrocarbon group such as phenyl group. The content of a methacrylic acid ester monomer unit in the methacrylic resin (PM) may preferably be 50% by mass or more, more preferably 80% by mass or more, particularly preferably 90% by mass or more, and may be 100% by mass from the viewpoint of transparency.

The methacrylic resin (PM) may contain a structural unit derived from one or more other monomers other than the methacrylic acid ester. Examples of the other monomers include acrylic acid esters such as methyl acrylate (MA), ethyl acrylate, n-propyl acrylate, isopropyl acrylate, n-butyl acrylate, isobutyl acrylate, tert-butyl acrylate, hexyl acrylate, 2-ethylhexyl acrylate, nonyl acrylate, decyl acrylate, dodecyl acrylate, stearyl acrylate, 2-hydroxyethyl acrylate, 2-hydroxypropyl acrylate, 4-hydroxybutyl acrylate, cyclohexyl acrylate, 2-methoxyethyl acrylate, 3-methoxybutyl acrylate, trifluoromethyl acrylate, trifluoroethyl acrylate, pentafluoroethyl acrylate, glycidyl acrylate, allyl acrylate, phenyl acrylate, tolyl acrylate, benzyl acrylate, isobornyl acrylate, and 3-dimethylaminoethyl acrylate. Among them, MA, ethyl acrylate, n-propyl acrylate, isopropyl acrylate, n-butyl acrylate, isobutyl acrylate, tert-butyl acrylate, and the like are preferable, MA, ethyl acrylate, and the like are more preferable, and MA is particularly preferable from the viewpoint of availability. The content of the structural unit derived from other monomers in the methacrylic resin (PM) is preferably 10% by mass or less, more preferably 5% by mass or less, and particularly preferably 2% by mass or less.

The methacrylic resin (PM) can be obtained by polymerizing preferably one or more methacrylic acid esters containing MMA, and if necessary, other monomers. When a plurality of types of monomers are used, a plurality of types of monomers are usually mixed to prepare a monomer mixture and then polymerization is carried out. The polymerization method is not particularly limited, and radical polymerization methods such as a bulk polymerization method, a suspension polymerization method, a solution polymerization method, and an emulsion polymerization method are preferable from the viewpoint of productivity.

The weight average molecular weight (Mw) of the methacrylic resin (PM) is preferably 40,000 to 500,000. When the Mw is 40,000 or more, the methacrylic resin-containing layer is excellent in scratch resistance and heat resistance, and when the Mw is 500,000 or less, the methacrylic resin-containing layer is excellent in moldability. As used herein, the "Mw" is a value in terms of standard polystyrene measured using gel permeation chromatography (GPC), unless otherwise stated.

### <Methacrylic Resin Composition (MR1)>

The methacrylic resin composition (MR1) contains the above-described methacrylic resin (PM) and SMA resin (S), and can further contain, if necessary, one or more other polymers. The content of the methacrylic resin (PM) in the resin composition (MR1) is preferably 5 to 80% by mass, more preferably 5 to 55% by mass, and particularly preferably 10 to 50% by mass. The content of the SMA resin (S) in the resin composition (MR1) is preferably 95 to 20% by mass, more preferably 95 to 45% by mass, and particularly preferably 90 to 50% by mass. When the content of these resins is within the above-described range, the heat resistance of the surface layer is improved, and when a laminated sheet is heated in a step of forming a cured coating film, surface conditions of the laminated sheet can be suppressed from being roughened. In addition, the difference in the glass transition temperature from that of the polycarbonate resin (PC) used in the substrate layer can be made smaller and the warpage of the laminated sheet in sheet formation can be reduced.

As used herein, the SMA resin (S) is a copolymer containing one or more aromatic vinyl compounds and a structural unit derived from one or more acid anhydrides including a maleic anhydride (MAH). Examples of the aromatic vinyl compound include styrene (St); nuclear alkyl-substituted styrene such as 2-methylstyrene, 3-methylstyrene, 4-methylstyrene, 4-ethylstyrene, and 4-tert-butylstyrene; and α-alkyl-substituted styrene such as α-methylstyrene and 4-methyl-α-methylstyrene. Among them, styrene (St) is preferable from the viewpoint of availability. The content of an aromatic vinyl compound monomer unit in the SMA resin (S) is preferably 50 to 85% by mass, more preferably 55 to 82% by mass, and particularly preferably 60 to 80% by mass from the viewpoints of the transparency and humidity resistance of the resin composition (MR1). As the acid anhydride, at least a maleic anhydride (MAH) is used and if necessary, other acid anhydrides such as citraconic anhydride and dimethyl maleic anhydride may be used, from the viewpoint of availability. The content of an acid anhydride monomer unit in the SMA resin (S) is preferably 15 to 50% by mass, more preferably 18 to 45% by mass, and particularly preferably 20 to 40% by mass from the viewpoints of the transparency and heat resistance of the resin composition (MR1).

The SMA resin (S) can contain a structural unit derived from one or more methacrylic acid ester monomers, in addition to the aromatic vinyl compound and the acid anhydride. Examples of the methacrylic acid ester include MMA, ethyl methacrylate, n-propyl methacrylate, isopropyl methacrylate, n-butyl methacrylate, isobutyl methacrylate, t-butyl methacrylate, 2-ethylhexyl methacrylate, cyclohexyl methacrylate, phenyl methacrylate, benzyl methacrylate, and 1-phenylethyl methacrylate. Among them, methacrylic acid alkyl esters having an alkyl group having 1 to 7 carbon atoms and the like are preferable. MMA is particularly preferable from the viewpoints of the heat resistance and transparency of the SMA resin (S). The content of the methacrylic acid ester monomer unit in the SMA resin (S) is preferably 1 to 35% by mass, more preferably 3 to 30% by mass, and particularly preferably 5 to 26% by mass from the viewpoints of the bending workability and transparency of the laminated sheet. In this case, the content of the aromatic vinyl compound monomer unit is preferably 50 to 84% by mass, and the content of the acid anhydride monomer unit is preferably 15 to 49% by mass.

The SMA resin (S) may have a structural unit derived from other monomers other than the aromatic vinyl compound, acid anhydride, and methacrylic acid ester. As the other monomers, those described in the above description of the methacrylic resin (PM) can be used. The content of the other monomer unit in the SMA resin (S) is preferably 10% by mass or less, more preferably 5% by mass or less, and particularly preferably 2% by mass or less.

The SMA resin (S) can be obtained by polymerizing the aromatic vinyl compound, acid anhydride, if necessary, methacrylic acid ester, and if necessary, the other monomers. In this polymerization, a plurality of types of monomers are usually mixed to prepare a monomer mixture and then polymerization is carried out. The polymerization method is not particularly limited, and radical polymerization methods such as a bulk polymerization method and a solution polymerization method are preferable from the viewpoint of productivity.

The Mw of the SMA resin (S) is preferably 40,000 to 300,000. When the Mw is 40,000 or more, the methacrylic resin-containing layer is excellent in scratch resistance and impact resistance, and when the Mw is 300,000 or less, the methacrylic resin-containing layer is excellent in moldability.

The resin composition (MR1) can be obtained by mixing the methacrylic resin (PM), SMA resin (S), and if necessary, other polymers. Examples of mixing methods include a melt mixing method and a solution mixing method. In the melt mixing method, melt-kneading can be carried out using a single- or multi-axis kneader, a melt kneader such as an open roll, a Banbury Mixer, and a kneader, and the like, and if necessary, under an inert gas atmosphere such as nitrogen gas, argon gas, and helium gas. In the solution mixing method, the methacrylic resin (PM) and the SMA resin (S) can be dissolved in an organic solvent such as toluene, tetrahydrofuran, and methylethylketone, and mixed.

### <Methacrylic Resin Composition (MR2)>

The methacrylic resin composition (MR2) contains the above-described methacrylic resin (PM) and rubber particles having a multilayer structure (RP), and can further contain, if necessary, one or more other polymers. The content of the methacrylic resin (PM) in the resin composition (MR2) is preferably 80 to 99% by mass, and more preferably 85 to 95% by mass. The content of the rubber particles having a multilayer structure (RP) in the resin composition (MR2) is preferably 20 to 1% by mass, and more preferably 15 to 5% by mass. When the surface layer contains the rubber particles having a multilayer structure (RP), the fracture resistance and the like of the laminated sheet can be improved. When the content of the rubber particles having a multilayer structure (RP) is excessively small, cracks may occur at the end portions depending on conditions during punching process. On the other hand, when the content of the rubber particles having a multilayer structure is excessively large, there are concerns such as that whitening may occur on the laminated sheet during molding and bending, the surface hardness of the surface layer may be decreased and thereby scratches are likely to be formed, and the product appearance after shape transfer may deteriorate.

As used herein, the rubber particles having a multilayer structure (RP) are acrylic rubber particles having a multilayer structure. Examples of the rubber particles having a multilayer structure (RP) include acrylic rubber particles having a multilayer structure that has one or more graft copolymer layers containing one or more acrylic acid alkyl ester copolymers. As such acrylic rubber particles having a multilayer structure, those disclosed in Japanese Unexamined Patent Application Publication No. 2004-352837 and the like can be used. The acrylic rubber particles having a multilayer structure can preferably have a crosslinked polymer layer containing a unit of acrylic acid alkyl ester having 6 to 12 carbon atoms.

The number of layers of the rubber particles having a multilayer structure (RP) is not particularly limited, and it may be two layers or three or more layers. The rubber particles having a multilayer structure (RP) are preferably particles having a core-shell multilayer structure of three or more layers including the innermost layer (RP-a) and one or more intermediate layers (RP-b) and the outermost layer (RP-c).

The constituent polymer of the innermost layer (RP-a) contains an MMA unit and a grafting or crosslinking monomer unit, and can further contain, if necessary, one or more other monomer units. The content of the MMA unit in the constituent polymer of the innermost layer (RP-a) is preferably 80 to 99.99% by mass, more preferably 85 to 99% by mass, and particularly preferably 90 to 98% by mass. The proportion of the innermost layer (RP-a) in the particles having a multilayer structure (RP) of three or more layers is preferably 0 to 15% by mass, and more preferably 7 to 13% by mass. When the proportion of the innermost layer (RP-a) is within such a range, the heat resistance of the surface layer can be increased.

The constituent polymer of the intermediate layer (RP-b) contains an acrylic acid alkyl ester unit having 6 to 12 carbon atoms and a grafting or crosslinking monomer unit, and can further contain, if necessary, one or more other monomer units. The content of the acrylic acid alkyl ester unit in the constituent polymer of the intermediate layer (RP-b) is preferably 70 to 99.8% by mass, more preferably 75 to 90% by mass, and particularly preferably 78 to 86% by mass. The proportion of the intermediate layer (RP-b) in the rubber particles having a multilayer structure (RP) of three or more layers is preferably 40 to 60% by mass, and more preferably 45 to 55% by mass. When the proportion of the intermediate layer (RP-b) is within such a range, the surface hardness of the surface layer can be increased and the surface layer can be hardly cracked.

The constituent polymer of the outermost layer (RP-c) contains an MMA unit, and can further contain, if necessary, one or more other monomer units. The content of the MMA unit in the constituent polymer of the outermost layer (RP-c) is preferably 80 to 100% by mass, more preferably 85 to 100% by mass, and particularly preferably 90 to 100% by mass. The proportion of the outermost layer (RP-c) in the particles having a multilayer structure (RP) of three or more layers is preferably 35 to 50% by mass, and more preferably 37 to 45% by mass. When the proportion of the outermost layer (RP-c) is within such a range, the surface hardness of the surface layer can be increased and the surface layer can be hardly cracked.

The particle diameter of the rubber particles having a multilayer structure (RP) is preferably 0.05 to 0.3 µm. The particle diameter can be measured by known methods such as electron microscopy and dynamic light scattering measurement. For example, the measurement by electron microscopy can be carried out by selectively staining a specific layer of the rubber particles having a multilayer structure (RP) by an electron staining method, actually measuring the particle diameter of a plurality of particles using a transmission electron microscope (TEM) or scanning electron microscope (SEM), and then determining the average value thereof.

The rubber particles having a multilayer structure (RP) can be used in latex or powder form containing the rubber particles having a multilayer structure (RP) and dispersing particles (D) to suppress a reduction in handleability due to conglutination between the rubber particles having a multilayer structure (RP) and a reduction in impact resistance due to poor dispersion during melt-kneading. For example, the dispersing particles (D) consist of a (co)polymer of one or more MMA-based monomers and can use particles having a smaller particle diameter relative to the rubber particles having a multilayer structure (RP).

The particle diameter of the dispersing particles (D) is preferably as small as possible from the viewpoint of improving dispersibility, and is preferably 40 to 120 nm, and more preferably 50 to 100 nm from the viewpoint of production reproducibility by an emulsion polymerization method. The amount of the dispersing particles (D) added is preferably 10 to 50% by mass, and more preferably 20 to 40% by mass based on the total amount of the rubber particles having a multilayer structure (RP) and the dispersing particles (D) from the viewpoint of an effect of improving dispersibility.

### <Infrared Absorbing Agent>

The surface layer can preferably contain one or two or more infrared absorbing agents.

As the infrared absorbing agent, known ones can be used, and preferable is at least one fine particle selected from the group consisting of:
a tungsten oxide fine particle represented by the general formula W_{y}O_{z} wherein W is tungsten, O is oxygen, and 2.2 ≤ z/y ≤ 2.999;
a composite tungsten oxide fine particle represented by the general formula MₓW_{y}O_{z} wherein M is at least one element selected from the group consisting of H, an alkali metal, an alkaline earth metal, and a rare earth element, W is tungsten, O is oxygen, 0.001 ≤ x/y ≤ 1, and 2.2 ≤ z/y ≤ 3;
a composite oxide fine particle represented by the general formula LaXO₃ wherein X is at least one metal element selected from the group consisting of Ni, Co, Fe, and Mn;
a boride fine particle represented by the general formula XBₘ wherein X is at least one metal element selected from the group consisting of Y, Sr, Ca, and a lanthanoid, and 4.0 ≤ m ≤ 6.2),
an indium tin oxide (ITO) fine particle; and
an antimony tin oxide (ATO) fine particle.

The concentration of the infrared absorbing agent contained in the surface layer is designed so that the transmittance at a wavelength of 1,500 nm of the laminated sheet can be 60% or less, depending on the thickness of the surface layer. Although it depends on the thickness of the surface layer, it is preferably 0.01 to 1.00% by mass, more preferably 0.05 to 0.50% by mass, and particularly preferably 0.10 to 0.30% by mass.

Typically, there is a tendency that, in the layer to which the infrared absorbing agent is added, the temperature is increased and the deterioration reaction of the resin and the like is promoted by absorbing infrared rays during the weather resistance test. In the present invention, change in color (coloring) during the weather resistance test can be suppressed by adding the infrared absorbing agent to the surface layer containing the methacrylic resin (PM) that is excellent in weather resistance instead of the substrate layer containing the polycarbonate resin (PC) that is poor in weather resistance. Specifically, the ΔE value that is a parameter of the change in color (coloring) during the weather resistance test can be suppressed to preferably 4.0 or less, more preferably 3.5 or less, and particularly preferably 2.5 or less.

The timing of the addition of the infrared absorbing agent may be during polymerization or after polymerization of the resins such as the methacrylic resin (PM), the SMA resin (S), and the rubber particles having a multilayer structure (RP), or may be during mixing or after mixing of a plurality of types of resins including the methacrylic resin (PM).

### <Optional Component>

Other polymers that can be contained in the surface layer are not particularly limited, and the same as those described in the above description of the substrate layer can be used. The content of the other polymers in the surface layer is preferably 10% by mass or less, more preferably 5% by mass or less, and particularly preferably 2% by mass or less.

The surface layer can contain, if necessary, other various additives other than the infrared absorbing agent. As other additives, the same as those described in the above description of the substrate layer can be used. The content of the additive can be appropriately set within a range not impairing the effects of the present invention. For example, the content of the antioxidant is preferably 0.01 to 1 part by mass, the content of the ultraviolet absorber is preferably 0.01 to 3 parts by mass, the content of the light stabilizer is preferably 0.01 to 3 parts by mass, and the content of the lubricant is preferably 0.01 to 3 parts by mass, per 100 parts by mass of the constituent resin of the substrate layer.

The surface layer preferably contains the ultraviolet absorber from the viewpoint of preventing the deterioration of the polycarbonate resin (PC) contained in the substrate layer and the organic dye that can be contained in the substrate layer.

When other polymers and/or other additives other than the infrared absorbing agent are contained in the surface layer, the timing of the addition may be during polymerization or after polymerization of the resins such as the methacrylic resin (PM), the SMA resin (S), and the rubber particles having a multilayer structure (RP), or may be during mixing or after mixing of a plurality of types of resins including the methacrylic resin (PM).

### (Total Thickness of Laminated Sheet)

The laminated sheet of the present invention has a total thickness of 3.0 to 10.0 mm, preferably 3.5 to 8.0 mm, and more preferably 4.0 to 7.0 mm. When the total thickness is 3.0 mm or more, the rigidity of the laminated sheet can be ensured, and when the laminated sheet has a large area, the flexure of the laminated sheet can be suppressed. When the total thickness is 3.0 mm or more, the toughness of the laminated sheet can be ensured and the occurrence of cracks or breaks on the laminated sheet during the falling ball test can be suppressed. The total thickness of more than 10.0 mm is not preferable from the viewpoints of material cost and weight reduction.

### (Relation between Thickness of Substrate Layer (T1) and Total Thickness of Surface Layer (T2))

The laminated sheet of the present invention satisfies T1 > T2 wherein T1 represents the thickness of the substrate layer and T2 represents the total thickness of the surface layer.

The total thickness of the surface layer (T2) means the total value of the thickness of the surface layers 12A and 12B formed on both surfaces of the substrate layer 11 in the laminated sheet 10X of the first embodiment shown in Fig. 1, and means the thickness of the surface layer 12 alone formed on one surface of the substrate layer 11 in the laminated sheet 10Y of the second embodiment shown in Fig. 2.

The total thickness of the surface layer (T2) is preferably 0.05 to 0.60 mm, more preferably 0.10 to 0.50 mm, particularly preferably 0.10 to 0.40 mm, and most preferably 0.10 to 0.30 mm. When the total thickness of the surface layer (T2) is less than 0.05 mm, the rigidity of the laminated sheet may be reduced and the surface hardness after laminating the cured coating film that serves as a hard coat layer and the like may be insufficient. When the total thickness of the surface layer (T2) is more than 0.60 mm, the toughness of the laminated sheet may be reduced and cracks or breaks may occur during the falling ball test.

### (Total Light Transmittance (Tt) of Laminated Sheet)

The laminated sheet of the present invention has a total light transmittance (Tt) of 3 to 60%, preferably 5 to 50%, and more preferably 10 to 40%. With the total light transmittance (Tt) within the above-described range, the balance between the light shielding properties and the light transmitting properties is suitable when the laminated sheet is used as the resin glazing and the like.

### (Transmittance at Wavelength of 1,500 nm of Laminated Sheet)

The laminated sheet of the present invention has a transmittance at a wavelength of 1,500 nm of 60% or less and it is preferably 50% or less, and more preferably 40% or less. With the transmittance at a wavelength of 1,500 nm within the above-described range, infrared rays can be effectively shielded when the laminated sheet is used as the resin glazing and the like. For example, when the laminated sheet is used for window members such as automobiles and buildings and the like, it can suppress a temperature increase in a vehicle, a room, and the like, and can reduce the sensible temperature of humans.

When the substrate layer contains a carbon black, good infrared shielding properties can be achieved without adding any infrared absorbing agent to the surface layer. Therefore, when the substrate layer contains the carbon black, the infrared absorbing agent may be or may not be added to the surface layer.

When the substrate layer contains no carbon black, desired infrared shielding properties can be achieved by adding the infrared absorbing agent to the surface layer.

### (Color Tone of Laminated Sheet)

The color tone of the laminated sheet can be measured using a spectrometer under the condition of transmission mode. In the laminated sheet of the present invention, the absolute value of a* is 10.0 or less and the absolute value of b* is 10.0 or less in the L*a*b* color space defined by JIS Z 8781-4. Preferably the absolute value of a* is 9.0 or less and the absolute value of b* is 9.0 or less. More preferably, the absolute value of a* is 8.0 or less and the absolute value of b* is 8.0 or less. Particularly preferably, the absolute value of a* is 7.0 or less and the absolute value of b* is 7.0 or less. When the absolute value of a* and the absolute value of b* are within the above-described range, the laminated sheet of the present invention can exhibit black close to jet black, which is preferable.

When only carbon black is used as the colorant added to the substrate layer, the color tone of the laminated sheet tends to be reddish black that is specific to carbon black (see Comparative Example 2 of the section [Examples] below). When the carbon black is used as the colorant added to the substrate layer, reddish can be reduced and a color tone close to jet black can be obtained by using an organic dye in combination.

When no carbon black is used as the colorant added to the substrate layer and one or two or more organic dyes exhibiting black alone or in combination are used, a color tone close to jet black can be obtained.

### (Other Layers)

The laminated sheet of the present invention may contain other layers as long as the surface layer is laminated on at least one surface of the substrate layer.

The laminated sheet of the present invention can contain, if necessary, a cured coating film on the outermost surface. The cured coating film can serve as a scratch resistant layer (hard coat layer) or a low reflective layer for an effect of improving visibility. The cured coating film can be formed by a known method.

Examples of the material of the cured coating film include inorganic-based, organic-based, organic-inorganic-based, and silicone-based materials, and organic-based and organic-inorganic-based materials are preferable from the viewpoint of productivity.

The inorganic-based cured coating film can be formed by, for example, forming a film of an inorganic material such as metal oxides such as SiO₂, Al₂O₃, TiO₂, and ZrO₂ by vapor-phase film formation such as vacuum vapor deposition and sputtering.

The organic-based cured coating film can be formed by, for example, applying a paint containing a resin such as melamine-based resin, alkyd-based resin, urethane-based resin, and acrylic resin and cured the paint by heating, or by applying a paint containing a polyfunctional acrylic-based resin and ultraviolet curing the paint.

The organic-inorganic-based cured coating film can be formed by, for example, applying an ultraviolet curable hard coat paint containing inorganic ultrafine particles such as silica ultrafine particles in which a photopolymerization reactive functional group introduced into the surface and a curable organic component to subject the curable organic component and the photopolymerization reactive functional group of the inorganic ultrafine particles to polymerization reaction by irradiation with ultraviolet light. In this method, a mesh-shaped crosslinked coating film in which the inorganic ultrafine particles are dispersed in an organic matrix while being chemically bonded to the organic matrix can be obtained.

The silicone-based cured coating film can be formed by, for example, subjecting a partial hydrolysis product such as carbon functional alkoxysilane, alkyltrialkoxysilane, and tetraalkoxysilane, or a material obtained by blending colloidal silica with the partial hydrolysis product to polycondensation.

In the above method, examples of the method for applying the material include dip coating, various roll coatings such as gravure roll coating, flow coating, rod coating, blade coating, spray coating, die coating, and bar coating.

The thickness of a scratch resistant (hard coating) cured coating film (the scratch resistant layer, the hard coat layer) is preferably 2 to 30 µm, and more preferably 5 to 20 µm. When the thickness is too small, the surface hardness is insufficient, and when the thickness is too large, cracks may occur due to bending in the production process. The thickness of a low reflective cured coating film (low reflective layer) is preferably 80 to 200 nm, and more preferably 100 to 150 nm. When the thickness is too small or too large, low reflection performance may be insufficient.

In addition to that, the laminated sheet of the present invention can have, if necessary, a known surface treatment layer such as, an anti-glare layer, an anti-reflection layer, and an anti-finger print layer, on the surface.

### [Method for Producing Laminated Sheet]

Hereinafter, a preferred aspect of the method for producing the laminated sheet of the present invention will be described. The laminated sheet of the present invention can be produced by a known method and is preferably produced by a production method comprising coextrusion.

With reference to the drawing, the structure of the apparatus for production of the laminated sheet of one embodiment according to the present invention will be described.

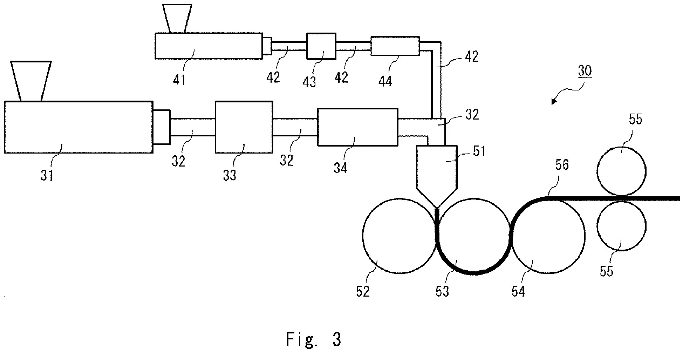

The apparatus for production 30 shown in Fig. 3 comprises a substrate layer extruder 31, a substrate layer metering pump 33, and a substrate layer filtration means 34 which are connected through a substrate layer single tube 32. A substrate layer resin material is melted and plasticized using the substrate layer extruder 31 and extruded into the substrate layer single tube 32. The substrate layer resin material in a molten state extruded into the substrate layer single tube 32 is sent downstream by using the metering pump 33 such as a gear pump. The substrate layer filtration means 34 such as a polymer filter is placed at the subsequent stage of the metering pump 33 and deteriorated resins and other foreign substances are removed before lamination.

The apparatus for production 30 also comprises a surface layer extruder 41, a surface layer metering pump 43, and a surface layer filtration means 44 which are connected through a surface layer single tube 42. A surface layer resin material is melted and plasticized using the surface layer extruder 41 and extruded into the surface layer single tube 42. The surface layer resin material in a molten state extruded into the surface layer single tube 42 is sent downstream by using the metering pump 43 such as a gear pump. The surface layer filtration means 44 such as a polymer filter is placed at the subsequent stage of the metering pump 43 and deteriorated resins and other foreign substances are removed before lamination.

The apparatus for production 30 also comprises a T die 51, a plurality of cooling rolls (the first to third cooling rolls 52 to 54 in the example illustrated), and a pair of winding rolls 55.

The substrate layer resin material in a molten state after passing through the substrate layer filtration means 34 and the surface layer resin material in a molten state after passing through the surface layer filtration means 44 are co-extruded from the T die 51 having a wide outlet in a molten state and in the form of a thermoplastic resin laminate in which the surface layer is laminated on at least one surface of the substrate layer. Examples of the lamination method include a feed block method in which lamination is carried out before flowing into the T die and a multi-manifold method in which lamination is carried out inside the T die. The multi-manifold method is preferable from the viewpoint of increasing the interface smoothness between the layers of the laminated sheet.

The thermoplastic resin laminate in a molten state that is co-extruded from the T die 51 is pressurized and cooled by using a plurality of cooling rolls (the first to third cooling rolls 52 to 54 in the example illustrated). The number of cooling rolls is appropriately designed.

Examples of the cooling roll include a metal roll and an elastic roll comprising a metal outer cylinder on the outer peripheral portion (hereinafter also referred to as the metal elastic roll). Examples of the metal roll include a drilled roll and a spiral roll. The surface of the metal roll may be a mirror surface, or may have a pattern, unevenness, or the like. The metal elastic roll consists of, for example, a core roll made of stainless steel or the like, a metal outer cylinder made of stainless steel or the like that covers the outer peripheral surface of this core roll, and a fluid sealed between these core roll and metal outer cylinder, and it can show elasticity by the presence of the fluid. The thickness of the metal outer cylinder is preferably about 2 to 5 mm. The metal outer cylinder preferably has bending properties, flexibility, and the like, and preferably has a seamless structure having no welded joint. The metal elastic roll comprising such a metal outer cylinder is ease to use because it is excellent in durability, can be handled like a usual mirror surface roll if the metal outer cylinder is mirror finished, and if a pattern, an unevenness, or the like is imparted on the metal outer cylinder, it can become a roll capable of transferring the shape.

The laminated sheet 56 obtained after cooling is wound by the pair of winding rolls 55. The coextrusion, cooling, and winding steps described above are continuously carried out. As used herein, although the laminate in the heated and molten state is principally represented as the "thermoplastic resin laminate" and the laminate in a solid form is represented as the "laminated sheet", there is no definite boundary between the two.

In the laminated sheet of the present invention, the substrate layer containing the polycarbonate resin (PC) contains one or two or more colorants. As the colorant, a carbon black and/or an organic dye is preferable.

Also, in the laminated sheet of the present invention, the surface layer containing the methacrylic resin (PM) can preferably contain one or two or more infrared absorbing agents.

According to the present invention, a laminated sheet having light shielding properties, light transmitting properties, infrared shielding properties, and color tone which are suitable for resin glazing and the like can be provided by adjusting the type and the added concentration of one or two or more colorants added to the substrate layer, the thickness of the substrate layer, and if necessary, the type and the added concentration of one or two or more infrared absorbing agents added to the surface layer, and the thickness of the surface layer.

In the laminated sheet of the present invention, the deterioration of the polycarbonate resin (PC) and organic dye and the deterioration of the color tone associated therewith can be suppressed in the weather resistance test, because the polycarbonate resin (PC) contained in the substrate layer and the organic dye that can be contained in the substrate layer can be protected from external light by the surface layer (for example, the ultraviolet absorber contained in the surface layer).

Typically, there is a tendency that, in the layer to which an infrared absorbing agent is added, the temperature is increased and the deterioration reaction of the resin and the like is promoted by absorbing infrared rays during the weather resistance test. When the infrared absorbing agent is used, change in color (coloring) during the weather resistance test can be suppressed by adding the infrared absorbing agent to the surface layer containing the methacrylic resin (PM) that is excellent in weather resistance instead of the substrate layer containing the polycarbonate resin (PC) and, if necessary, the organic dye that are poor in weather resistance.

Due to the above effects, the laminated sheet of the present invention is excellent in weather resistance.

Since the laminated sheet of the present invention has a total thickness of 3.0 to 10.0 mm, and T1 > T2 is satisfied wherein T1 represents the thickness of the substrate layer and T2 represents the total thickness of the surface layer, it is excellent in toughness. Therefore, the occurrence of cracks and breaks during the falling ball test is suppressed.

As described above, according to the present invention, a laminated sheet having a good color tone, good infrared shielding properties, and excellent weather resistance, and a production method thereof can be provided.

### [Applications]

The laminated sheet of the present invention is suitable as the resin glazing and the like used for window members and the like of transport machinery such as automobiles and buildings.

### Examples

Examples and Comparative Examples according to the present invention will be described.

### [Evaluation Item and Evaluation Method]

Evaluation item and Evaluation method are as follows.

### (Copolymerization Composition of SMA Resin (S))

The copolymerization composition of the SMA resin (S) was determined in the following procedure by the ¹³C-NMR method using a nucleus magnetic resonance apparatus ("GX-270" manufactured by JEOL Ltd.).

In 1.5 ml of deuterated chloroform, 1.5 g of the SMA resin (S) was dissolved to prepare a sample solution and the ¹³C-NMR spectrum thereof was measured under conditions of room temperature and a cumulative number of 4000 to 5000 times to determine the following values.
- [The integrated intensity of the carbon peak (near 127, 134, 143 ppm) of a benzene ring (6 carbon atoms) in a styrene unit]/6
- [The integrated intensity of the carbon peak (near 170 ppm) of a carbonyl moiety (2 carbon atoms) in a maleic anhydride unit]/2
- [The integrated intensity of the carbon peak (near 175 ppm) of a carbonyl moiety (1 carbon atom) in an MMA unit]/1

The mole ratios of the styrene unit, maleic anhydride unit, and MMA unit in the sample were determined from the area ratios of the values described above. The mass compositions of each monomer unit in the SMA resin (S) were determined from the mole ratios obtained and the mass ratio (styrene unit:maleic anhydride unit:MMA unit = 104:98:100) of each monomer unit.

### (Weight Average Molecular Weight (Mw))

The Mw of the resin was determined by the GPC method in the following procedure. Tetrahydrofuran was used as an eluent and two "TSKgel SuperMultipore HZM-M" and a "SuperHZ4000" manufactured by Tosoh Corporation were used as a column by connecting in series. An HLC-8320 (product number) manufactured by Tosoh Corporation equipped with a differential refractometer detector (RI detector) was used as a GPC apparatus. In 5 ml of the tetrahydrofuran, 4 mg of the resin was dissolved to prepare a sample solution. The temperature of the column oven was set to 40°C and 20 µl of the sample solution was injected thereto at the rate of 0.35 ml/min as an eluent flow to measure the chromatogram. Ten standard polystyrenes having a molecular weight within a range of 400 to 5,000,000 were measured by GPC and a calibration curve showing the relation between the retention time and the molecular weight was prepared. The Mw was determined based on this calibration curve.

### (Glass Transition Temperature of Resin (Composition))

The glass transition temperature of the resin (composition) was measured by putting 10 mg of the resin (composition) into an aluminum pan and using a differential scanning calorimeter ("DSC-50", manufactured by Rigaku Corporation). After nitrogen substitution was carried out for 30 minutes or more, the temperature was temporarily raised from 25°C to 200°C at a rate of 20°C/min, retained for 10 minutes, and then cooled to 25°C under a 10 ml/min nitrogen flow (primary scanning). Then, the temperature was raised to 200°C at a rate of 10°C/min (secondary scanning), and the glass transition temperature was calculated from the results obtained in the secondary scanning by a middle point method. When a plurality of Tg data were obtained in the resin composition containing two or more of resins, the value derived from the resin as the main component was adopted as the Tg data.

### (Total Light Transmittance (Tt))

A test specimen of 50 mm × 50 mm was cut out from the obtained laminated sheet. The total light transmittance (Tt) of the test specimen was measured using an "HM-150" manufactured by MURAKAMI COLOR RESEARCH LABORATORY CO.,LTD.

### (Transmittance at Wavelength of 1,500 nm, Initial Color Tone of Laminated Sheet)

A test specimen of 50 mm × 50 mm was cut out from the obtained laminated sheet. A "SHIMADZU UV-Vis-NIR Spectrophotometer UV-3600" manufactured by SHIMADZU CORPORATION was used to measure the absorption spectrum of the laminated sheet in a wavelength range of 300 to 3,000 nm, thereby determining the transmittance at a wavelength of 1,500 nm. The lower the transmittance at a wavelength of 1,500 nm, the higher the infrared shielding properties of the laminated sheet. Then, as the initial color tone, the color coordinates of the L*a*b* color space defined by JIS Z 8781-4 (L* value, a* value, b* value) were measured.

### (Infrared Shielding Properties)

A heat insulated container made of polystyrene foam in which each of the length, width, and height of the outer dimension was about 40 cm, the thickness was about 5 cm, and the upper surface thereof was open, was prepared. In this heat insulated container, a black panel was installed at a position of 5 cm downward from the upper surface having an opening portion in parallel to the bottom surface so that the temperature of the black panel can be measured by a thermocouple.

A test specimen of 450 mm × 450 mm was cut out from the obtained laminated sheet. The test specimen was installed on the upper surface of the above heat insulated container having an opening portion such that no spaces can be visually found between the test specimen and the heat insulated container. At this time, the test specimen was installed such that the surface layer of the laminated sheet may be outside of the container. The heat insulated container installed with the test specimen like this was installed outdoors where the temperature was 30°C and direct sunlight was irradiated. The black panel temperature was reached almost saturated 30 minutes after initiating the outdoor installation and the black panel temperature (T_{BP}) was recorded. The lower this temperature T_{BP}, the more excellent in infrared shielding properties and heat shielding properties the laminated sheet is.

### (Weather Resistance)

A test specimen of 50 mm × 50 mm was cut out from the obtained laminated sheet. The test specimen was installed on a "super xenon weather meter SX-75" manufactured by Suga Test Instruments Co., Ltd. such that the surface layer may be placed on the light source side. A weather resistance test for 2000 hours was conducted under the conditions of a UV irradiation intensity: 180 W/m², a black panel temperature: 63°C, and rainfall for 18 minutes in 120 minutes. After completion of the test, the surface of the test specimen was rubbed lightly and washed using a urethane sponge containing a neutral detergent. Then, a "SHIMADZU UV-Vis-NIR Spectrophotometer UV-3600" manufactured by SHIMADZU CORPORATION was used to measure the absorption spectrum of the laminated sheet in a wavelength range of 300 to 3000 nm. Then, as the color tone after the weather resistance test, the color coordinates of the L*a*b* color space defined by JIS Z 8781-4 (L* value, a* value, b* value) were measured in the same manner as the initial color tone (before the weather resistance test). The color difference (ΔE value) before and after the weather resistance test was determined. The smaller the ΔE value, the smaller the change in color of the laminated sheet after the weather resistance test is, which is preferable.

### (Falling Ball Test)

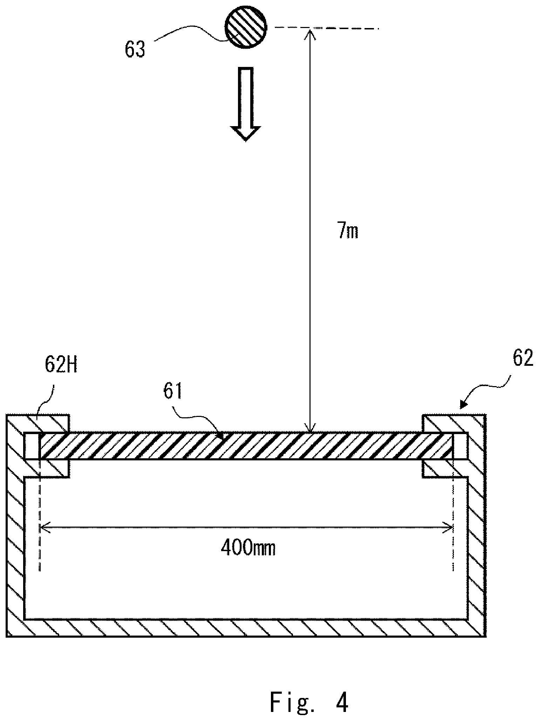

A test specimen of 400 mm × 400 mm was cut out from the obtained laminated sheet. As shown in Fig. 4, a box-shaped sample holder 62 that has a holding portion 62H for holding a peripheral edge portion (a region of 10 mm from each edge of the sides) of the test specimen 61 at the upper portion thereof and in which the upper surface was open, was prepared. The test specimen 61 was attached to this sample holder 62. The height from the inner bottom surface of the sample holder 62 to the lower surface of the test specimen 61 was 100 mm.

To the upper surface of the test specimen 61 attached to the sample holder 62 as described above, a steel ball 63 of 250 g weight was allowed to naturally drop vertically from a position where the height from the surface of the test specimen 61 to the center of the steel ball 63 was 7 m. After the drop of the ball, the appearance of the test specimen 61 was visually observed and the presence or absence of cracks or breaks was confirmed. This test was conducted for 5 test specimens and the evaluation was carried out based on the following criteria.
A (good): Cracks and breaks were not found in all the test specimens after the drop of the ball.
B (fair): Cacks and/or breaks were found in one test specimen after the drop of the ball.
C (poor): Cacks and/or breaks were found in two or more test specimens after the drop of the ball.

### [Materials]

The materials used are as follows.

### <Polycarbonate Resin (PC)>

### (PC1)

"SD POLYCA (register trade mark)" manufactured by Sumika Styron Polycarbonate Limited (Temperature: 300°C, MFR under 1.2 kg load = 6.7 g/10 minutes).

### <Polycarbonate Resin (PC) + Additive>

To the polycarbonate resin (PC1), one or two of an organic dye (Macrolex Green 5B, Macrolex Violet 3R, Diaresin Orange HS), a carbon black ("#1000" manufactured by Mitsubishi Chemical Corporation), and an infrared absorbing agent ("YMDS-874" manufactured by SUMITOMO METAL MINING CO., LTD.) were added and the mixture was melt-kneaded by a biaxial extruder to obtain a plurality of types of polycarbonate resin-containing compositions (in each of them, temperature: 300°C, MFR under 1.2 kg load = 7.0 g/10 minutes).

The amount of the organic dye and carbon black added was adjusted such that the total light transmittance (Tt) of the laminated sheet can take the values described in Table 1-2 and Table 2-2, depending on the examples.

The amount of the infrared absorbing agent added was adjusted such that the transmittance at a wavelength of 1,500 nm of the laminated sheet can take the values described in Table 1-2 and Table 2-2, depending on the examples.

### <Methacrylic Resin (PM)>

### (PM1)

Polymethyl Methacrylate (PMMA), "PARAPET (register trade mark) HR" manufactured by KURARAY CO., LTD. (temperature: 230°C, MFR under 3.8 kg load = 2.0 g/10 minutes, Tg = 115°C).

### <Methacrylic Resin (PM) + Additive>

To the methacrylic resin (PM1), 1.00% by mass of an ultraviolet absorber ("LA-31RG" manufactured by ADEKA) and/or 0.75% by mass of an infrared absorbing agent ("YMDS-874" manufactured by SUMITOMO METAL MINING CO., LTD.) were added and the mixture was melt-kneaded by a biaxial extruder to obtain a plurality of types of methacrylic resin-containing compositions (in each of them, temperature: 230°C, MFR under 3.8 kg load = 2.0 g/10 minutes, Tg = 115°C).

### <SMA Resin (S)>

### (S1)

In accordance with the method described in International Patent Publication No. WO 2010/013557, an SMA resin (a styrene-maleic anhydride-MMA copolymer, styrene unit/maleic anhydride unit/MMA unit (mass ratio) = 56/18/26, Mw = 150,000, Tg = 138°C) was obtained.

### <Methacrylic Resin-Containing Resin Composition (MR1)>

### (MR1-1)

The methacrylic resin (PM1) and the SMA resin (S1) were mixed in a mass ratio of 30:70 to obtain a methacrylic resin-containing resin composition (MR1-1).

### <Methacrylic Resin-Containing Resin Composition (MR1) + Additive>

To the methacrylic resin-containing resin composition (MR1-1), 1.00% by mass of an ultraviolet absorber ("LA-31RG" manufactured by ADEKA), and/or 0.75% by mass or 1.50% by mass of an infrared absorbing agent ("YMDS-874" manufactured by SUMITOMO METAL MINING CO., LTD.) were added and the mixture was melt-kneaded by a biaxial extruder to obtain a methacrylic resin-containing resin composition.

<Rubber Particles Having Multilayer Structure (RP)>

### (RP1)

An innermost layer (RP-a1), intermediate layer (RP-b1), and outermost layer (RP-c1) consisting of a copolymer having the following composition were sequentially formed to produce an acrylic rubber particles having a multilayer structure (RP1) of three-layer structure. The particle diameter was 0.23 µm.

The innermost layer (RP-a1): methyl methacrylate (MMA) unit/methyl acrylate(MA) unit/allyl methacrylate unit as a crosslinkable monomer (mass ratio) = 32.91/2.09/0.07,

The intermediate layer (RP-b1): butyl acrylate unit/styrene unit/ allyl methacrylate unit as a crosslinkable monomer (mass ratio) = 37.00/8.00/0.90,

The outermost layer (RP-c1): methyl methacrylate (MMA) unit/methyl acrylate (MA) unit (mass ratio) = 18.80/1.20.

### <Dispersing Particles (D)>

(D1) Methacrylic-based copolymer particles, methyl methacrylate (MMA) unit/methyl acrylate unit (mass ratio) = 90/10, particle diameter: 0.11 µm.

### <Powder Containing Rubber Particles Having A Multilayer Structure (RD1)>

A latex containing rubber particles having a multilayer structure (RP1) and a latex containing dispersing particles (D1) were mixed in a proportion of 67:33 as the solid mass ratio. The mixed latex obtained was frozen at -30°C for 4 hours. The frozen latex was charged into a hot water of 90°C in an amount twice the amount of the frozen latex and dissolved to give a slurry, and then, it was retained at 90°C for 20 minutes, dried over, and dried at 80°C to obtain a powder containing rubber particles having a multilayer structure (RD1).

### <Methacrylic Resin-Containing Resin Composition (MR2)>

### (MR2-1)

The methacrylic resin (PM1) and the powder containing rubber particles having a multilayer structure (RD1) were melt-kneaded at a mass ratio of 88:12 to obtain a methacrylic resin-containing resin composition (MR2-1).

### <Methacrylic Resin-Containing Resin Composition (MR2) + Additive>

To the methacrylic resin-containing resin composition (MR2-1), one or two of 1.00% by mass of an ultraviolet absorber ("LA-31RG" manufactured by ADEKA), 0.75% by mass or 1.50% by mass of an infrared absorbing agent ("YMDS-874" manufactured by SUMITOMO METAL MINING CO., LTD.), an organic dye (Macrolex Green 5B, Macrolex Violet 3R, Diaresin Orange HS), and indium tin oxide (ITO) fine particles serving as an infrared absorbing agent ("PI-6T" manufactured by Mitsubishi Materials Electronic Chemicals Co., Ltd.) were added and the mixture was melt-kneaded by a biaxial extruder to obtain a methacrylic resin-containing resin composition.

The amount of the organic dye added was adjusted such that the values of total light transmittance of the laminated sheet can take the values described in Table 1-2 and Table 2-2, depending on the examples.

The amount of the infrared absorbing agent and ITO fine particles serving as the infrared absorbing agent was adjusted such that the transmittance at a wavelength of 1,500 nm of the laminated sheet can take the values described in Table 1-2 and Table 2-2, depending on the examples.

Although the ITO fine particles are one of infrared absorbing agents, the "infrared absorbing agent" in the tables is "YMDS-874" manufactured by SUMITOMO METAL MINING CO., LTD.

### [Examples 1 and 2]

An apparatus for production as shown in Fig. 3 was used to form a laminated sheet.

As the substrate layer extruder 31, a single-screw extruder with 150 mmϕ (manufactured by Toshiba Machine Co., Ltd.) was used to melt extrude a substrate layer resin material obtained by adding the organic dye and the carbon black to the polycarbonate resin (PC1). As the surface layer extruder 41, a single-screw extruder with 65 mmcp (manufactured by Toshiba Machine Co., Ltd.) was used to melt extrude a surface layer resin material obtained by adding 1.00% by mass of the ultraviolet absorber to the methacrylic resin (PM1). In Example 1, two surface layer extruders 41 are provided.

These resins in a molten state were laminated through a multi-manifold type die and a thermoplastic resin laminate in a molten state of three-layer structure (a surface layer 1/a substrate layer/a surface layer 2) (Example 1) or of two-layer structure (a surface layer 1/a substrate layer) (Example 2) was coextruded from the T die 51. This thermoplastic resin laminate in a molten state was sandwiched between the first cooling roll 52 and the second cooling roll 53 which are adjacent to each other, wound around the second cooling roll 53, sandwiched between the second cooling roll 53 and the third cooling roll 54, wound around the third cooling roll 54, thereby cooling the laminate. After cooling, the laminated sheet 56 obtained was wound by a pair of winding rolls 55.

The laminated structure (the composition and the thickness of each layer), the relation between thicknesses of each layer, the total thickness, and the evaluation results are shown in Table 1-1 and Table 1-2.

### [Examples 3 to 15, Comparative Examples 1 to 6, Reference Example 1]

Laminated sheets of two-layer structure or three-layer structure were prepared in the same manner as Example 1 or Example 2 except that the composition and the thickness of each layer were changed as shown in Table 1-1 or Table 2-1. In these examples, the conditions which are not listed in the tables are defined as the common conditions. The evaluation results of each example are shown in Table 1-2 and Table 2-2.

**[Table 1-1]**

| | Surface layer 1 | | | Substrate layer | | | Surface layer 2 | | | T1 >T2 | Total thickness (mm) |
|---|---|---|---|---|---|---|---|---|---|---|---|
| | Resin | Additive (amount added) | Thickness (mm) | Resin | Additive | Thickness (mm) | Resin | Additive | Thickness (mm) | | |
| Example 1 | PM1 | Ultraviolet absorber (1.00%) | 0.10 | PC1 | Organic dye Carbon black | 3.80 | PM1 | Ultraviolet absorber (1.00%) | 0.10 | Satisfaction | 4.0 |
| Example 2 | PM1 | Ultraviolet absorber (1.00%) | 0.10 | PC1 | Organic dye Carbon black | 3.90 | - | | 0.00 | Satisfaction | 4.0 |
| Example 3 | MR2-1 | Ultraviolet absorber (1.00%) | 0.10 | PC1 | Organic dye Carbon black | 3.80 | MR2-1 | Ultraviolet absorber (1.00%) | 0.10 | Satisfaction | 4.0 |
| Example 4 | MR2-1 | Ultraviolet absorber (1.00%) | 0.10 | PC1 | Organic dye Carbon black | 3.90 | < | | 0.00 | Satisfaction | 4.0 |
| Example 5 | MR1-1 | Ultraviolet absorber (1.00%) | 0.10 | PC1 | Organic dye Carbon black | 3.80 | MR1-1 | Ultraviolet absorber (1.00%) | 0.10 | Satisfaction | 4.0 |
| Example 6 | MR1-1 | Ultraviolet absorber (1.00%) | 0.10 | PC1 | Organic dye Carbon black | 3.90 | < | | 0.00 | Satisfaction | 4.0 |
| Example 7 | MR2-1 | Ultraviolet absorber (1.00%) | 0.10 | PC1 | Organic dye | 3.80 | MR2-1 | Ultraviolet absorber (1.00%) | 0.10 | Satisfaction | 4.0 |
| | | Infrared absorbing agent(0.75%) | | | | | | Infrared absorbing agent (0.75%) | | | |
| Example 8 | MR2-1 | Ultraviolet absorber (1.00%) | 0.10 | PC1 | Organic dye | 3.90 | - | | 0.00 | Satisfaction | 4.0 |
| | | Infrared absorbing agent(1.50%) | | | | | | | | | |
| Example 9 | MR2-1 | Ultraviolet absorber (1.00%) | 0.10 | PC1 | Organic dye Carbon black | 3.80 | MR2-1 | Ultraviolet absorber (1.00%) | 0.10 | Satisfaction | 4.0 |
| | | Infrared absorbing agent(0.75%) | | | | | | Infrared absorbing agent (0.75%) | | | |
| Example 10 | MR2-1 | Ultraviolet absorber (1.00%) | 0.10 | PC1 | Organic dye Carbon black | 3.90 | - | | 0.00 | Satisfaction | 4.0 |
| | | Infrared absorbing agent (1.50%) | | | | | | | | | |
| Example 11 | MR1-1 | Ultraviolet absorber (1.00%) | 0.10 | PC1 | Organic dye | 3.80 | MR1-1 | Ultraviolet absorber (1.00%) | 0.10 | Satisfaction | 4.0 |
| | | Infrared absorbing agent (0.75%) | | | | | | Infrared absorbing agent (0.75%) | | | |
| Example 12 | MR1-1 | Ultraviolet absorber (1.00%) | 0.10 | PC1 | Organic dye | 3.90 | - | | 0.00 | Satisfaction | 4.0 |
| | | Infrared absorbing agent (1.50%) | | | | | | | | | |
| Example 13 | MR2-1 | ITO | 0.10 | PC1 | Organic dye | 3.80 | MR2-1 | ITO | 0.10 | Satisfaction | 4.0 |
| Example 14 | MR2-1 | Ultraviolet absorber (1.00%) | 0.10 | PC1 | Organic dye | 7.80 | MR2-1 | Ultraviolet absorber (1.00%) | 0.10 | Satisfaction | 8.0 |
| | | Infrared absorbing agent (0.75%) | | | | | | Infrared absorbing agent (0.75%) | | | |
| Example 15 | MR2-1 | Ultraviolet absorber (1.00%) | 0.10 | PC1 | Organic dye | 3.80 | MR2-1 | Ultraviolet absorber (1.00%) | 0.10 | Satisfaction | 4.0 |
| | | Infrared absorbing agent (0.75%) | | | | | | Infrared absorbing agent (0.75%) | | | |

**[Table 1-2]**

| | Total light transmittance Tt | Transmittance at 1,500 nm | Color tone | | Infrared shielding properties T_{BP} | leather resistance ΔE | Failing ball test |
|---|---|---|---|---|---|---|---|
| | | | a* | b* | | | |
| Example 1 | 20% | 55% | 1.5 | 8.5 | 79°C | 2.3 | B |
| Example 2 | 20% | 55% | 1.5 | 8.5 | 77°C | 2.3 | A |
| Example 3 | 20% | 55% | 1.4 | 8.3 | 79°C | 2.2 | A |
| Example 4 | 20% | 55% | 1.3 | 8.3 | 78°C | 2.3 | A |
| Example 5 | 20% | 55% | 1.5 | 8.5 | 79°C | 2.3 | B |
| Example 6 | 20% | 55% | 1.5 | 8.5 | 78°C | 2.3 | A |
| Example 7 | 20% | 30% | 1.1 | -5.1 | 71°C | 3.1 | A |
| Example 8 | 20% | 30% | 1.1 | -5.1 | 71°C | 3.2 | A |
| Example 9 | 20% | 20% | 1.2 | 8.4 | 69°C | 2.6 | A |
| Example 10 | 20% | 20% | 1.2 | 8.4 | 69°C | 2.6 | A |
| Example 11 | 20% | 30% | 1.2 | -5.0 | 71°C | 3.1 | B |
| Example 12 | 20% | 30% | 1.2 | -5.0 | 70°C | 3.1 | B |
| Example 13 | 20% | 30% | 0.9 | -3.9 | 71°C | 1.8 | A |
| Example 14 | 20% | 30% | 1.2 | -5.0 | 63°C | 2.3 | A |
| Example 15 | 40% | 30% | 1.1 | -5.1 | 73°C | 3.1 | A |

**[Table 2-1]**

| | Surface layer 1 | | | Substrate layer | | | Surface layer 2 | | | T1>T2 | Total thickness (mm) |
|---|---|---|---|---|---|---|---|---|---|---|---|
| | Resin | Additive | Thickness (mm) | Resin | Additive | Thickness (mm) | Resin | Additive | Thickness (mm) | | |
| Comparative Example 1 | PM1 | Ultraviolet absorber (1.00%) | 0.10 | PC1 | Organic dye | 3.80 | PM1 | Ultraviolet absorber (1.00%) | 0.10 | Satisfaction | 4.0 |
| Comparative Example 2 | PM1 | Ultraviolet absorber (1.00%) | 0.10 | PC1 | Carbon black | 3.80 | PM1 | Ultraviolet absorber (1.00%) | 0.10 | Satisfaction | 4.0 |
| Comparative Example 3 | PM1 | Ultraviolet absorber (1.00%) | 0.10 | PC1 | Organic dye | 1.80 | PM1 | Ultraviolet absorber (1.00%) | 0.10 | Satisfaction | 2.0 |
| | | Infrared absorbing agent (0.75%) | | | | | | Infrared absorbing agent (0.75%) | | | |
| Comparative Example 4 | MR2-1 | Ultraviolet absorber (1.00%) | 0.10 | PC1 | Organic dye | 1.80 | MR2-1 | Ultraviolet absorber (1.00%) | 0.10 | Satisfaction | 2.0 |
| | | Infrared absorbing agent (0.75%) | | | | | | Infrared absorbing agent (0.75%) | | | |
| Comparative Example 5 | MR1-1 | Ultraviolet absorber (1.00%) | 0.10 | PC1 | Organic dye | 1.80 | MR1-1 | Ultraviolet absorber (1.00%) | 0.10 | Satisfaction | 2.0 |
| | | Infrared absorbing agent (0.75%) | | | | | | Infrared absorbing agent (0.75%) | | | |
| Comparative Example 6 | MR2-1 | Organic dye | 0.10 | PC1 | | 3.80 | MR2-1 | Organic dye | 0.10 | Satisfaction | 4.0 |
| Reference Example 1 | MR2-1 | Ultraviolet absorber (1.00%) | 0.10 | PC1 | Organic dye Infrared absorbing agent | 3.80 | MR2-1 | Ultraviolet absorber (1.00%) | 0.10 | Satisfaction | 4.0 |

**[Table 2-2]**

| | Total light transmittance Tt | Transmittance at 1,500 nm | Color tone | | Infrared shielding properties T_{BP} | Weather resistance ΔE | Falling ball test |
|---|---|---|---|---|---|---|---|
| | | | a* | b* | | | |
| Comparative Example 1 | 20% | 85% | 1.2 | -4.9 | 85°C | 2.9 | B |
| Comparative Example 2 | 20% | 45% | 1.8 | 14.4 | 75°C | 1.5 | B |
| Comparative Example 3 | 20% | 30% | 1.1 | -4.9 | 75°C | 4.1 | C |
| Comparative Example 4 | 20% | 30% | 1.0 | -4.9 | 75°C | 4.1 | C |
| Comparative Example 5 | 20% | 30% | 1.2 | -4.9 | 75°C | 4.2 | C |
| Comparative Example 6 | 20% | 30% | 1.2 | -4.9 | 71°C | 7.5 | A |
| Reference Example 1 | 20% | 30% | 1.2 | -5.0 | 71°C | 6.5 | A |

### [Summary of results]

As the colorant, the carbon black and the organic dye were added to the substrate layer containing a polycarbonate resin, in Examples 1 to 6. As the colorant, the organic dye alone or a combination of the carbon black and the organic dye were added to the substrate layer containing the polycarbonate resin, and further, the infrared absorbing agent was added to the surface layer containing the methacrylic resin, in Examples 7 to 15. In each of these Examples 1 to 15, the laminated sheet having a total light transmittance (Tt) of 3 to 60% and a transmittance at 1,500 nm of 60% or less was obtained. The laminated sheet of each Example had the absolute value of a* of 10.0 or less and the absolute value of b* of 10.0 or less, exhibited black close to jet black, had a good color tone, and was excellent in external appearance quality. The laminated sheet of each Example had the black panel temperature T(_{BP}) of 80°C or less in the test of the infrared shielding properties, and had good infrared shielding properties and heat shielding properties. The laminated sheet of each Example had a small color difference ΔE before and after the weather resistance test and good weather resistance. The laminated sheet of each Example had good falling ball test results and good toughness.

The laminated sheet of Comparative Example 1 in which only the organic dye was added to the substrate layer as the colorant and no infrared absorbing agent was added to the surface layer had a high transmittance at a wavelength of 1,500 nm of 85%, a high black panel temperature (T_{BP}) of 85°C in the test of infrared shielding properties, and poor infrared shielding properties. When the organic dye is used as the colorant to be added to the substrate layer, it is preferable to use the carbon black in combination or to add the infrared absorbing agent to the surface layer.

The laminated sheet of Comparative Example 2 in which only the carbon black was added to the substrate layer as the colorant and no infrared absorbing agent was added to the surface layer had a low transmittance at a wavelength of 1,500 nm of 45%, a low black panel temperature (T_{BP}) of 75°C in the test of infrared shielding properties, and good infrared shielding properties. However, the value of b* was as high as 14.4, the color tone was reddish black, and the external appearance quality was poor. When the carbon black is used as the colorant to be added to the substrate layer, it is preferable to use the organic dye in combination.

In the laminated sheet of Comparative Examples 3 to 5 having the total thickness less than 3.0 mm, cracks and/or breaks are occurred during the falling ball test and the toughness was poor.

The laminated sheet of Comparative Example 6 in which no colorant was added to the substrate layer and the organic dye was added to the surface layer had a large color difference ΔE before and after the weather resistance test and poor weather resistance. When the organic dye is added to the substrate layer, the organic dye is protected by the ultraviolet absorber contained in the surface layer, whereas when the organic dye is added to the surface layer, it is considered that similar effects cannot be obtained. The surface layer preferably contains no organic dye.

The laminated sheet of Reference Example 1 in which the organic dye and the infrared absorbing agent were added to the substrate layer and no infrared absorbing agent was added to the surface layer had a large color difference ΔE before and after the weather resistance test and poor weather resistance. It is considered that the temperature is increased during the weather resistance test and the deterioration reaction of the resin and the like are promoted in the layer containing the infrared absorbing agent. Therefore, it is preferable that no infrared absorbing agent be added to the layer containing the polycarbonate resin or the organic dye which have poor weather resistance.

### Reference Signs List

10X, 10Y Laminated sheet
11 Substrate layer
12, 12A, 12B Surface layer

## Claims

1. A laminated sheet (10X, 10Y) comprising a surface layer (12) containing a methacrylic resin laminated on at least one surface of a substrate layer (11) containing a polycarbonate resin,
wherein the substrate layer (11) contains a colorant;
a total thickness is 3.0 to 10.0 mm;
T1 > T2 is satisfied wherein T1 represents a thickness of the substrate layer (11) and T2 represents a total thickness of the surface layer (12);
a total light transmittance is 10 to 40%;
a transmittance at a wavelength of 1,500 nm is 60% or less; and
an absolute value of a* value is 10.0 or less and an absolute value of b* is 10.0 or less in an L*a*b* color space defined by JIS Z 8781-4, and
the laminated sheet (10X, 10Y) is for resin glazing.

2. The laminated sheet (10X, 10Y) according to Claim 1, wherein the colorant is a carbon black and/or an organic dye.

3. The laminated sheet (10X, 10Y) according to Claim 1 or 2, wherein the surface layer (12) contains an infrared absorbing agent.

4. The laminated sheet (10X, 10Y) according to Claim 3, wherein the infrared absorbing agent is at least one fine particle selected from the group consisting of:
a tungsten oxide fine particle represented by the general formula W_{y}O_{z} wherein W is tungsten, O is oxygen, and 2.2 ≤ z/y ≤ 2.999;
a composite tungsten oxide fine particle represented by the general formula MₓW_{y}O_{z} wherein M is at least one element selected from the group consisting of H, an alkali metal, an alkaline earth metal, and a rare earth element, W is tungsten, O is oxygen, 0.001 ≤ x/y ≤ 1, and 2.2 ≤ z/y ≤ 3;
a composite oxide fine particle represented by the general formula LaXO₃ wherein X is at least one metal element selected from the group consisting of Ni, Co, Fe, and Mn;
a boride fine particle represented by the general formula XBₘ wherein X is at least one metal element selected from the group consisting of Y, Sr, Ca, and a lanthanoid, and 4.0 ≤ m ≤ 6.2;
an indium tin oxide fine particle; and
an antimony tin oxide fine particle.

5. The laminated sheet (10X, 10Y) according to any one of Claims 1 to 4, wherein the surface layer (12) contains 5 to 90% by mass of the methacrylic resin and 95 to 10% by mass of a copolymer containing an aromatic vinyl compound unit and a maleic anhydride unit.

6. The laminated sheet (10X, 10Y) according to Claim 5, wherein the copolymer contains 50 to 84% by mass of the aromatic vinyl compound unit, 15 to 49% by mass of the maleic anhydride unit, and 1 to 35% by mass of a methacrylic acid ester unit.

7. The laminated sheet (10X, 10Y) according to any one of Claims 1 to 4, wherein the surface layer (12) contains the methacrylic resin and rubber particles having a multilayer structure.

8. The laminated sheet (10X, 10Y) according to any one of Claims 1 to 7, further comprising a scratch resistant layer, an anti-glare layer, or an anti-reflection layer on the surface layer (12).

9. A method for producing the laminated sheet (10X, 10Y) according to any one of Claims 1 to 8, wherein a laminated structure of the substrate layer (11) and the surface layer (12) is formed by coextrusion.

## Patentansprüche

1. Laminierte Folie (10X, 10Y), umfassend eine Oberflächenschicht (12), die ein Methacrylharz enthält, das auf mindestens eine Oberfläche einer Substratschicht (11) laminiert ist, die ein Polycarbonatharz enthält,
wobei die Substratschicht (11) ein Farbmittel enthält;
eine Gesamtdicke 3,0 bis 10,0 mm beträgt;
T1 > T2 erfüllt ist, wobei T1 eine Dicke der Substratschicht (11) darstellt und T2 eine Gesamtdicke der Oberflächenschicht (12) darstellt;
ein Gesamtlichttransmissionsgrad 10 bis 40% beträgt;
der Transmissionsgrad bei einer Wellenlänge von 1.500 nm 60% oder weniger beträgt; und
ein absoluter Wert eines a*-Werts 10,0 oder weniger und ein absoluter Wert b* 10,0 oder weniger in einem durch JIS Z 8781-4 definierten L*a*b*-Farbraum beträgt, und
die laminierte Folie (10X, 10Y) für Harzverglasung ist.

2. Laminierte Folie (10X, 10Y) nach Anspruch 1, wobei das Farbmittel ein Ruß und/oder ein organischer Farbstoff ist.

3. Laminierte Folie (10X, 10Y) nach Anspruch 1 oder 2, wobei die Oberflächenschicht (12) ein infrarotabsorbierendes Mittel enthält.

4. Laminierte Folie (10X, 10Y) nach Anspruch 3, wobei das infrarotabsorbierende Mittel mindestens ein Feinteilchen ist, ausgewählt aus der Gruppe, bestehend aus:
einem Wolframoxid-Feinteilchen, dargestellt durch die allgemeine Formel W_{y}O_{z}, wobei W Wolfram ist, O Sauerstoff ist und 2,2 ≤ z/y ≤ 2,999 ist;
einem Wolfram-Verbundoxid-Feinteilchen, dargestellt durch die allgemeine Formel MₓW_{y}O_{z}, wobei M mindestens ein Element ist, ausgewählt aus der Gruppe, bestehend aus H, einem Alkalimetall, einem Erdalkalimetall und einem Seltenerdelement, W Wolfram ist, O Sauerstoff ist, 0,001 ≤ x/y ≤ 1 und 2,2 ≤ z/y ≤ 3 ist;
einem Verbundoxid-Feinteilchen, dargestellt durch die allgemeine Formel LaXOs, wobei X mindestens ein Metallelement ist, ausgewählt aus der Gruppe, bestehend aus Ni, Co, Fe und Mn;
einem Borid-Feinteilchen, dargestellt durch die allgemeine Formel XBₘ, wobei X mindestens ein Metallelement ist, ausgewählt aus der Gruppe, bestehend aus Y, Sr, Ca und einem Lanthanoid und 4,0 ≤ m ≤ 6,2 ist;
einem Indiumzinnoxid-Feinteilchen; und
einem Antimonzinnoxid-Feinteilchen.

5. Laminierte Folie (10X, 10Y) nach einem der Ansprüche 1 bis 4, wobei die Oberflächenschicht (12) 5 bis 90 Massen-% des Methacrylharzes und 95 bis 10 Massen-% eines Copolymers enthält, das eine aromatische Vinylverbindungseinheit und eine Maleinsäureanhydrideinheit enthält.

6. Laminierte Folie (10X, 10Y) nach Anspruch 5, wobei das Copolymer 50 bis 84 Massen-% der aromatischen Vinylverbindungseinheit, 15 bis 49 Massen-% der Maleinsäureanhydrideinheit und 1 bis 35 Massen-% einer Methacrylsäureestereinheit enthält.

7. Laminierte Folie (10X, 10Y) nach einem der Ansprüche 1 bis 4, wobei die Oberflächenschicht (12) das Methacrylharz und Kautschukteilchen mit einer Mehrschichtstruktur enthält.

8. Laminierte Folie (10X, 10Y) nach einem der Ansprüche 1 bis 7, weiter umfassend eine kratzfeste Schicht, eine Blendschutzschicht oder eine Antireflexionsschicht auf der Oberflächenschicht (12).

9. Verfahren zum Herstellen der laminierten Folie (10X, 10Y) nach einem der Ansprüche 1 bis 8, wobei eine laminierte Struktur aus der Substratschicht (11) und der Oberflächenschicht (12) durch Coextrusion gebildet wird.

## Revendications

1. Feuille stratifiée (10X, 10Y) comprenant une couche superficielle (12) contenant une résine méthacrylique stratifiée sur au moins une surface d'une couche de substrat (11) contenant une résine de polycarbonate,
dans laquelle la couche de substrat (11) contient un colorant ;
une épaisseur totale est de 3,0 à 10,0 mm ;
T1 > T2 est satisfaite dans laquelle T1 représente une épaisseur de la couche de substrat (11) et T2 représente une épaisseur totale de la couche superficielle (12) ;
une transmittance lumineuse totale est de 10 à 40 % ;
une transmittance à une longueur d'onde de 1500 nm est de 60 % ou moins ; et une valeur absolue de valeur a* est de 10,0 ou moins et une valeur absolue de b* est de 10,0 ou moins dans un espace colorimétrique L*a*b* défini par JIS Z 8781-4, et
la feuille stratifiée (10X, 10Y) est destinée au glaçage à la résine.

2. Feuille stratifiée (10X, 10Y) selon la revendication 1, dans laquelle le colorant est un noir de carbone et/ou un colorant organique.

3. Feuille stratifiée (10X, 10Y) selon la revendication 1 ou 2, dans laquelle la couche superficielle (12) contient un agent d'absorption infrarouge.

4. Feuille stratifiée (10X, 10Y) selon la revendication 3, dans laquelle l'agent d'absorption infrarouge est au moins une particule fine sélectionnée parmi le groupe constitué de :
une particule fine d'oxyde de tungstène représentée par la formule générale W_{y}O_{z} dans laquelle W est tungstène, O est oxygène, et 2,2 ≤ z/y ≤ 2,999 ;
une particule fine d'oxyde de tungstène composite représentée par la formule générale MₓW_{y}O_{z} dans laquelle M est au moins un élément sélectionné parmi le groupe constitué de H, d'un métal alcalin, d'un métal alcalino-terreux et d'un élément de terres rares, W est tungstène, O est oxygène, 0,001 ≤ x/y ≤ 1, et 2,2 ≤ z/y ≤ 3 ;
une particule fine d'oxyde composite représentée par la formule générale LaXO₃ dans laquelle X est au moins un élément métallique sélectionné parmi le groupe constitué de Ni, Co, Fe et Mn ;
une particule fine de borure représentée par la formule générale XBₘ dans laquelle X est au moins un élément métallique sélectionné parmi le groupe constitué de Y, Sr, Ca et d'un lanthanide, et 4,0 ≤ m ≤ 6,2 ;
une particule fine d'oxyde d'indium et d'étain ; et
une particule fine d'oxyde d'antimoine et d'étain.

5. Feuille stratifiée (10X, 10Y) selon l'une quelconque des revendications 1 à 4, dans laquelle la couche superficielle (12) contient de 5 à 90 % en masse de la résine méthacrylique et 95 à 10 % en masse d'un copolymère contenant une unité de composé de vinyle aromatique et une unité d'anhydride maléique.

6. Feuille stratifiée (10X, 10Y) selon la revendication 5, dans laquelle le copolymère contient de 50 à 84 % en masse de l'unité de composé de vinyle aromatique, 15 à 49 % en masse de l'unité d'anhydride maléique et 1 à 35 % en masse d'une unité d'ester d'acide méthacrylique.

7. Feuille stratifiée (10X, 10Y) selon l'une quelconque des revendications 1 à 4, dans laquelle la couche superficielle (12) contient la résine méthacrylique et des particules de caoutchouc ayant une structure multicouche.

8. Feuille stratifiée (10X, 10Y) selon l'une quelconque des revendications 1 à 7, comprenant en outre une couche résistant aux rayures, une couche antireflet ou une couche antiréfléchissante sur la couche superficielle (12).

9. Procédé de production de la feuille stratifiée (10X, 10Y) selon l'une quelconque des revendications 1 à 8, dans lequel une structure stratifiée de la couche de substrat (11) et la couche superficielle (12) est formée par coextrusion.
